# EUROPÄISCHE PATENTSCHRIFT

(11) **EP 2 961 553 B1**
(45) Veröffentlichungstag und Bekanntmachung des Hinweises auf die Patenterteilung: **13.03.2019**
(21) Anmeldenummer: 14701916.0
(22) Anmeldetag: 27.01.2014
(51) Int. Cl.: B23F 23/12, B23F 5/16, B23Q 11/00

(54) **VERFAHREN ZUR SPANENDEN ERZEUGUNG ODER BEARBEITUNG EINER INNENVERZAHNUNG UND WERKZEUGMASCHINE**
METHOD FOR CUTTING OR MACHINING INTERNAL GEAR TEETH AND MACHINE TOOL
PROCÉDÉ DE PRODUCTION OU USINAGE PAR ENLÈVEMENT DE MATIÈRE D'UNE DENTURE INTERNE ET MACHINE-OUTIL

(30) Priorität: 26.02.2013 DE 102013003288
(43) Veröffentlichungstag der Anmeldung: 06.01.2016
(73) Patentinhaber: Gleason-Pfauter Maschinenfabrik GmbH, 71636 Ludwigsburg (DE)
(72) Erfinder: BROGNI, Johannes, CH-3293 Dotzigen (CH); PETRALLIA, Domenico, CH-3006 Bern (CH); WITSCHI, Oswald, CH-2554 Meinisberg (CH)
(74) Vertreter: Leinweber & Zimmermann
(86) Internationale Anmeldenummer: PCT/EP2014/000207
(87) Internationale Veröffentlichungsnummer: WO 2014/131487

(56) Entgegenhaltungen:
- EP-A1- 0 023 984
- CH-A- 252 841
- CN-Y- 201 389 696
- DE-A1- 4 424 452
- DE-A1-102010 051 338
- DE-A1-102011 009 027
- JP-A- H1 148 078
- US-A- 2 297 796

## Beschreibung

Die Erfindung betrifft ein Verfahren zur spanenden Erzeugung oder Bearbeitung einer Innenverzahnung eines um seine Rotationsachse drehbaren Werkstücks, welches radial einen Freiraum begrenzt, der sich axial wenigstens zu einer Seite hin über den innenverzahnten Bereich hinaus erstreckt und dessen radiale Ausdehnung sich an wenigstens einer Stelle in Erstreckungsrichtung verjüngt sowie eine zur Ausführung des Verfahrens geeignete Werkzeugmaschine.

Derartige innenverzahnte Werkstücke werden etwa in der Automobilindustrie für Automatikgetriebe, beispielsweise Acht- bis Neunganggetriebe benötigt und mittels Wälzstoßen hergestellt. Die Verjüngung der radialen Ausdehnung des Freiraums ergibt sich beispielsweise durch einen hinter der Innenverzahnung innen am Werkstück vorgesehenen Einstich für eine muffenartige Verbindung.

DE 10 2010 051 338 offenbart ein Werkzeug mit einer Spanleitvorrichtung zum Ableiten von bei Drehen, Bohren oder Gewindeschneiden entstandenen Fließspänen.

CH 252841 A offenbart eine einen Stirnfräser seitlich und hinten umschließende Späneabführvorrichtung.

US 2,297,796 offenbart eine Stanzeinrichtung mit einem gezielten Spanauslass für die beispielsweise von einem Bolzen gestanzten Späne, der zwischen einem Stanzstempel und einer Stanzform angeordnet ist.

CN 201389696 offenbart einen Entgratstahl zum Entfernen von Primärgraten an der unteren Stirnseite einer Außenverzahnung.

EP 0 023 984 A1 offenbart eine Bürste zur Befreiung der Stirnmesser eines Stirnmesserkopfes von Spänen.

Der Erfindung liegt die Aufgabe zugrunde, eine insbesondere unter Herstellungsgesichtspunkten verbesserte Weiterbildung eines Verfahrens der eingangs genannten Art anzugeben.

Diese Aufgabe wird von der Erfindung in verfahrenstechnischer Hinsicht im wesentlichen durch ein Verfahren mit den Merkmalen von Anspruch 1 gelöst. Dabei ist vorgesehen, dass man dazu ein um seine Rotationsachse drehend angetriebenes außenverzahntes Werkzeug von der anderen Seite her unter einem (von Null verschiedenen) Achskreuzwinkel in Wälzeingriff mit der Innenverzahnung bringt und dass man die Bewegung von anfallenden und einer Zentrifugalkraft unterworfenen Spänen im Bereich vor der Verjüngungsstelle durch mechanische Krafteinwirkung in einer dem Ursprung der Zentrifugalkraft entgegengesetzter Weise ändert.

Ein Erzeugungsverfahren über den Wälzeingriff mit einem außenverzahnten Werkzeug, der unter einem Achskreuzwinkel erfolgt, ist ein per se bekanntes Verfahren, das beispielsweise in der DE 10 2011 009 027 A1 hinsichtlich der Verfahrensgestaltung zwar vornehmlich für außenverzahnte Werkstücke erläutert ist, aber grundsätzlich auch zur Herstellung von innenverzahnten Werkstücken einfacher Geometrie einsetzbar ist. Zu den mit dieser Kinematik spanenden Bearbeitungsverfahren zählt das Wälzschälen mit einem Schälrad, welches eine bevorzugte Variante des erfindungsgemäßen Verfahrens bildet. Im Hause der Anmelderin wird anstelle des Begriffes Wälzschälen gerne auch der Ausdruck "power skiving" verwendet.

Die Erfindung beruht auf der überraschenden Erkenntnis, dass es mittels der erfindungsgemäß vorgesehenen mechanischen Krafteinwirkung auf die Späne im Bereich vor der Verjüngungsstelle in einer dem Ursprung der Zentrifugalkraft entgegengesetzten Weise möglich ist, ein Verfahren mit dieser Kinematik insgesamt ohne Beschädigung von Werkstück oder Werkzeug durchzuführen. Denn aufgrund der sehr hohen Werkstückdrehgeschwindigkeit von (je nach Werkstücksdurchmesser und Achskreuzwinkel) größer als 600 U/min, bevorzugt größer als 1500 U/min, insbesondere auch größer als 2000 U/min, wobei durchaus auch Geschwindigkeiten bis 3000 U/min oder höher, beispielsweise 3500 U/min, möglich sind, gelingt es ohne die erfindungsgemäß vorgesehene mechanische Krafteinwirkung nicht, eine Späneansammlung innerhalb des Werkstückes vor der Verjüngungsstelle und damit die Beschädigung oder Zerstörungen von Werkstück und/oder Werkzeug zu vermeiden. Die auf die Späne wirkenden Zentrifugalkräfte sind so hoch, dass die zur Herstellung von innenverzahnten Werkstücken einfacher Geometrie zum Ausblasen der Späne aus dem von der Innenverzahnung umgebenen Freiraum vorgesehenen Gebläse nicht mehr wirksam alle Späne erfassen können.

Bei dem erfindungsgemäßen Verfahren kann diese Späneansammlung jedenfalls insoweit ausreichend vermieden werden, dass keine Beschädigungen an Werkstück oder Werkzeug mehr auftreten.

Bevorzugt beinhaltet die Bewegungsänderung eine Verringerung der azimutalen Geschwindigkeitskomponente der Späne. Mit der Verringerung dieser Geschwindigkeitskomponente verringert sich die Zentrifugalkraft in quadratischer Abhängigkeit. Insbesondere kann vorgesehen werden, die azimutale Geschwindigkeitskomponente um eine oder mehrere Größenordnungen zu verringern, insbesondere de facto auf Null.

In einer weiteren Ausführungsform kann noch vorgesehen werden, dass die Bewegungsänderung eine radial nach innen weisende Geschwindigkeitskomponente der Späne hervorruft. Dadurch gelangen die Späne sehr rasch in einen radial zentraleren Bereich des Freiraums, was die Späneabfuhr nochmals erleichtert.

Erfindungsgemäß erfolgt die mechanische Krafteinwirkung durch Stoß der Späne gegen einen massereicheren, nicht-mitrotierenden Stoßpartner. Dieser stellt in einem nicht-mitrotierendem Bezugssystem gesehen eine feste Wand gegenüber den darauf prallenden Spänen dar.

Die Verjüngung selbst kann beispielsweise in Form einer Stufe auftreten. Dabei kann die Stufe insbesondere die hintere radial verlaufende Wand eines Einstiches am Werkstück sein.

In diesem Zusammenhang wird es bevorzugt, dass man den massereichen Stoßpartner in radialer Richtung nahe an die Begrenzung des Freiraums, aber insbesondere zum Werkstück kontaktfrei positioniert. Der Stoßpartner soll, jedenfalls sofern ihm keine Zusatzfunktion zugedacht ist, keinen Einfluss auf das Werkstück und seine Drehung haben.

Desweiteren wird es bevorzugt, dass man den massereichen Stoßpartner in axialer Richtung nahe an die Verjüngungsstelle, aber insbesondere zum Werstück kontaktfrei positioniert. Dadurch erhöht sich die Zuverlässigkeit der mechanischen Krafteinwirkung. Weiter bevorzugt gilt gleiches auch für eine etwaige Erweiterungsstelle. Mit anderen Worten sperrt der Stoßpartner den durch einen Einstich geschaffenen Freiraum am Werkstück.

Bevorzugt wird vorgesehen, den Stoßpartner durch den Freiraum im Bereich der Innenverzahnung hindurch zu halten und die Halterung in diesem Bereich mit Abstand zum Werkzeug zu positionieren. Es befindet sich somit neben dem außenverzahnten Werkzeug, das üblicherweise radial gesehen ein Drittel bis zwei Drittel des vorhandenen Freiraumes ohnehin beansprucht, noch ein weiterer Gegenstand in dem von der Innenverzahnung umschlossenen Raum. Das durch diese Anordnung geschaffene Risiko für Kollisionen zwischen dem Gegenstand und dem Werkzeug wird durch einen angemessenen Sicherheitsabstand zum Werkzeug vermindert.

Bevorzugt wird daher vorgesehen, den Bearbeitungseingriff zwischen Werkstück und Werkzeug erst dann vorzunehmen, wenn der massereiche Stoßpartner seine vorgesehene Lage erreicht hat.

Zweckmäßigerweise lässt man ein Fluid, insbesondere Luft, in Erstreckungsrichtung durch den Freiraum strömen, um insbesondere bei horizontalen Anordnungen der Werkstückachse den Spänen eine axiale Geschwindigkeitskomponente zu verleihen.

In vorrichtungstechnischer Hinsicht ist vorgesehen eine Einrichtung zur Änderung der Bewegung von in einem spanabhebenden Verfahren zur Erzeugung oder Bearbeitung einer Innenverzahnung eines Werkstückes anfallenden Spänen, mit einem sich in einer axialen Richtung erstreckenden Halsbereich zur Durchführung durch einen von der Innenverzahnung radial begrenzten Freiraum hindurch, einem am freien Ende des Halsbereiches radial auskragenden Kopfbereich, der eine für einen Stoß mit den Spänen vorgesehene Prallfläche aufweist, und einem an dem anderen Ende des Halsbereiches anschließenden Basisbereich zur Ankopplung an eine Bewegungseinrichtung, über die die Bewegungsänderungseinrichtung mit Bewegungskomponente in axialer Richtung und unabhängig davon mit Bewegungskomponente in radialer Richtung beweglich ist.

Der Halsbereich dieser Einrichtung ist derjenige Bereich, der den den eigentlichen Stoßpartner darstellenden Kopfbereich hält und sich dabei während der Bearbeitung parallel zum Werkzeug in dem von der Innenverzahnung umschlossenen Freiraum angeordnet ist. An der dem Kopfbereich abgewandten Seite ist die Bewegungsänderungseinrichtung über deren Basisbereich an eine Bewegungseinrichtung ankoppelbar ausgelegt, welche die zur Positionierung erforderlichen Bewegungen ermöglicht.

Besonders bevorzugt ist dabei vorgesehen, dass die axiale Abmessung des Kopfbereiches wenigstens z.T. an die Kontur des von dem Werkstück über den innenverzahnten Bereich hinausgehenden radial begrenzten Freiraum angepasst ist. Dies erhöht wiederum die Zuverlässigkeit der mechanischen Krafteinwirkung.

Die Prallfläche des Kopfbereiches könnte prinzipiell radial verlaufen. Es wird jedoch auch an eine gegenüber der radialen Richtung geneigten Prallfläche gedacht, die als Rampe für die Späne wirkt.

Die azimutale Ausdehnung des Kopfbereiches ist ebenfalls nur durch den Platzbedarf des Werkzeuges eingeschränkt. Grundsätzlich genügt aufgrund der hohen Werkstückdrehzahlen ein geringer überstreckter Azimutwinkel, also eine azimutale Ausdehnung des Kopfbereiches in der Größenordnung seiner radialen Abmessung. Der Kopfbereich kann sich jedoch azimutal gesehen über einen größeren Winkel wie 30° oder mehr, auch 60° oder mehr, insbesondere 90° oder mehr, oder sogar 120° oder mehr erstrecken. Dazu könnte der Kopfbereich auch mehrteilig ausgeführt sein, mit anderen Worten mehrere azimutal beabstandete Kopfbereiche vorgesehen sein.

In einer besonders bevorzugten Ausführungsform ist der Kopfbereich abnehmbar und insbesondere austauschbar. Damit könnte man die Bewegungsänderungseinrichtung ohne Lösen des Basisbereiches auf eine unterschiedliche Charge von Werkstücken anpassen.

In diesem Zusammenhang offenbart die Erfindung auch einen Satz von Bewegungsänderungseinrichtungen, deren Kopfbereich unterschiedliche axiale Abmessungen und unterschiedliche Ausdehnungen der radialen Auskragung hat, bereit. So könnte für jede unterschiedliche Charge dieser Werkstücke mit ggf. abweichender Geometrie der Begrenzung des Freiraumes eine passende Bewegungsänderungseinrichtung vorgesehen werden, um eine jeweils optimierte mechanische Krafteinwirkung zu erreichen.

Desweiteren ist in vorrichtungstechnischer Hinsicht eine Werkzeugmaschine mit den Merkmalen von Anspruch 11 bereitgestellt und unter Schutz gestellt. Diese ist eine Werkzeugmaschine für die spanende Erzeugung oder Bearbeitung einer Innenverzahnung an einem um seine Rotationsachse drehend antreibbaren Werkstück mit einem um seine Rotationsachse drehend angetriebenen, außenverzahnten und für einen Wälzeingriff mit der Innenverzahnung unter einem Achskreuzwinkel ausgelegten Werkzeug, wobei die Werkzeugmaschine eine Werkstückspindel zur Aufspannung des innenverzahnten Werkstückes, eine Werkzeugspindel für die Aufspannung des Werkzeugs, eine erste Linearachse zur Änderung der Relativlage zwischen Werkstück- und Werkzeugspindel mit einer parallel zur Werkstückachse verlaufenden Richtungskomponente, eine zweite Linearachse zur Änderung des Achsabstandes zwischen Werkstückdrehachse und Werkzeugdrehachse, und eine rotatorische Achse zur Änderung des Achskreuzwinkels zwischen Werkstückdrehachse und Werkzeugdrehachse aufweist, und im wesentlichen durch eine Bewegungseinrichtung gekennzeichnet ist, mit der eine Einrichtung nach einer der oben angegebenen Gestaltungen mit Bewegungskomponente parallel zur ersten Linearachse und insbesondere unabhängig davon mit einer weiteren Bewegungskomponente orthogonal zu dieser Bewegungskomponente bewegt wird.

Die Vorteile der erfindungsgemäßen Werkzeugmaschine ergeben sich aus den Vorteilen des erfindungsgemäßen Verfahrens, wobei die Werkzeugmaschine die zur Positionierung der den Stoßpartner bildenden Bewegungsänderungseinrichtung erforderlichen Bewegungsachsen aufweist.

Desweiteren ist vorgesehen, dass die Werkzeugmaschine eine Steuereinrichtung aufweist, die zur Steuerung der Werkzeugmaschine nach einem Verfahren gemäß einem der oben erläuterten Verfahrensaspekte ausgelegt ist.

Weitere Vorteile, Merkmale und Einzelheiten der Erfindung ergeben sich aus der nachfolgenden Beschreibung mit Bezug auf die beiliegenden Figuren, von denen
Fig. 1 eine die Bewegungsachsen einer Werkzeugmaschine umfassende Ansicht in einer perspektivischen Darstellung ist,
Fig. 2 ein Horizontalschnitt durch einen Bereich der Werkzeugmaschine aus Fig. 1 darstellt,
Fig. 3 eine vergrößerte Teilansicht von Fig. 2 ist, und
Fig. 4 eine nochmals vergrößerte Darstellung eines Bereichs aus Fig. 3 ist.

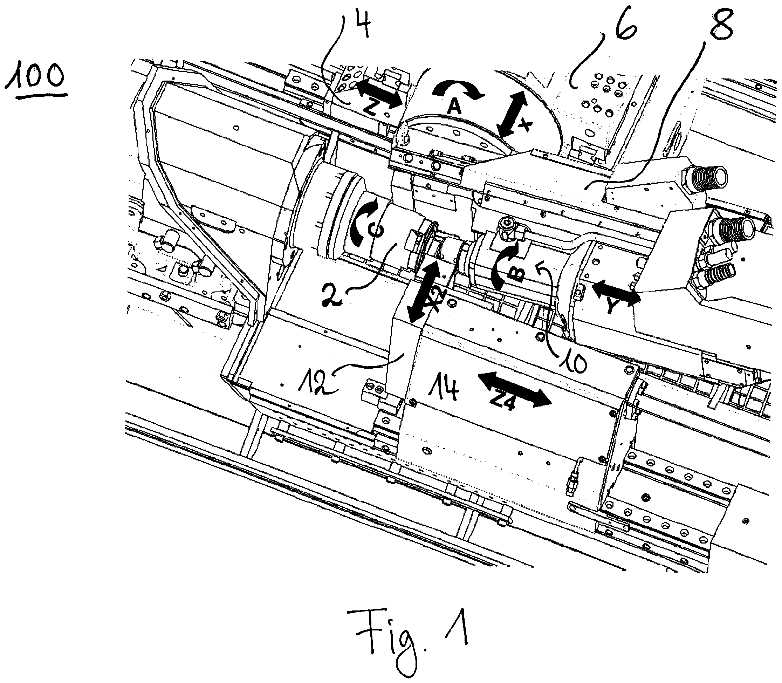

Fig. 1 zeigt in einer perspektivischen Draufsicht einen Bereich einer Werkzeugmaschine, anhand dessen sich die Bewegungsachsen der Maschine erkennen lassen. Die Werkzeugmaschine 100 ist für eine Werkstückbearbeitung ausgelegt, bei der die Erzeugung einer Verzahnung am Werkstück durch einen Bearbeitungseingriff zwischen Werkzeug und Werkstück erfolgt, die unter einem Achskreuzwinkel zwischen Werkstückdrehachse und Werkzeugdrehachse erfolgt. Im konkreten Beispielsfall wird die Maschine für das Wälzschälen von Innenverzahnungen eingesetzt, und als Schälmaschine bezeichnet.

Die Schälmaschine 100 weist eine an ihrem Maschinenbett fest gelagerte Werkstückspindel 2 auf, deren rotatorische Achse für die Werkstückdrehung mit C bezeichnet ist. Werkzeugseitig ist ein Horizontalschlitten 4 vorgesehen, der gegenüber dem Maschinenbett entlang einer Linearachse Z verschieblich ist, die parallel zur Achse der Werkstückspindel verläuft.

Der Horizontalschlitten 4 trägt einen weiteren Horizontalschlitten 6, der orthogonal zur Linearachse Z des Schlittens 4 entlang einer zweiten Linearachse X beweglich ist. Die Schlitten 4 und 6 bilden somit eine Kreuzschlittenanordnung.

Schwenkbar um eine zur zweiten Linearachse X parallele Schwenkachse A ist ein weiterer Linearschlitten 8 angeordnet, der die Werkzeugspindel 10 trägt. Die Linearbewegungsachse Y dieses verschwenkbaren Schlittens 8 wird somit durch die Schwenkstellung der Schwenkbewegung A bestimmt. Parallel zur Linearachse Y verläuft die Achse B für die Drehung des Werkzeuges. Über die Schwenkachse A wird somit der Achskreuzwinkel für die Erzeugung und Bearbeitung der Innenverzahnung des Werkstückes eingestellt.

Für die Werkstückspindeldrehung C und die Werkzeugspindeldrehung B sind in diesem Ausführungsbeispiel Direktantriebe vorgesehen. Wie üblich werden die Bewegungsachsen X, Y und Z sowie A, B und C über eine nicht dargestellte CNC-Steuerung für die Bearbeitung gesteuert. Soweit bisher beschrieben, ist der Aufbau der Werkzeugmaschine 100 bekannt. Die Maschine eignet sich neben dem Wälzschälen von Innen- oder Außenverzahnungen auch für Hartfeinbearbeitungen unter einem Achskreuzwinkel, aber auch für das Schaben (Weichschaben).

Die Schälmaschine 100 weist jedoch bezüglich der durch die Werkstück- und Werkzeugachsen C, B definierten Ebene entgegengesetzt der werkzeugseitigen Schlittenanordnung 4, 6, 8 eine weitere Bewegungseinrichtung auf. Diese ist in Form einer Kreuzschlittenanordnung 12, 14 realisiert, deren Schlitten 14 entlang der parallel zur ersten Linearachse Z verlaufenden vierten Linearachse Z4 beweglich am Maschinenbett geführt ist. Der Horizontalschlitten 14 trägt wiederum einen weiteren Horizontalschlitten 12, dessen Linearbewegungsachse X2 als fünfte Linearbewegungsachse der Schälmaschine 100 parallel zur zweiten Linearbewegungsachse X verläuft. Die Parallelität der Achsen Z4 und Z sowie X2 und X ist nicht zwingend erforderlich aber vorteilhaft. Wichtig in dieser Ausführungsform ist, dass einer der Schlitten 12, 14 eine Bewegung mit Bewegungskomponente parallel zur ersten Linearachse Z und der andere der Schlitten 12, 14 eine Bewegung mit Bewegungskomponente in Richtung der zweiten Linearachse X ausführen kann. Die Antriebe der Schlitten 12 und 14 sind ebenfalls von der Steuerung der Schälmaschine 100 CNC-gesteuert.

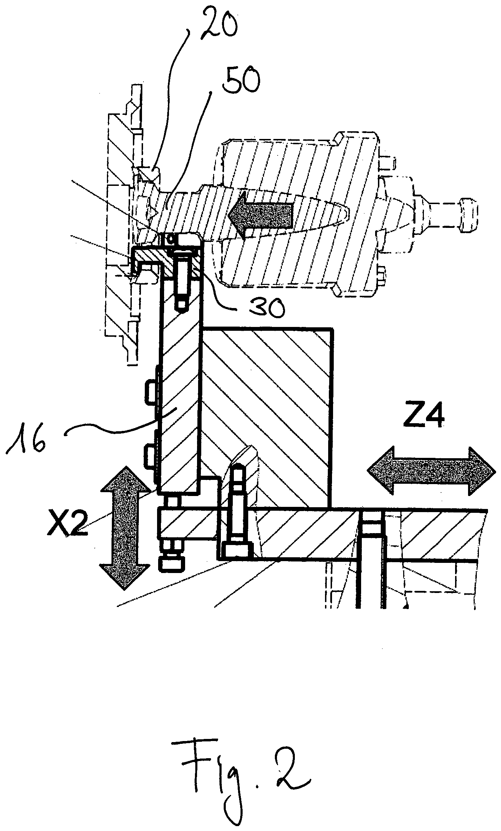

Wie besser aus Fig. 2 zu erkennen ist, weist der entlang der Achse X2 bewegbare Schlitten 12 noch einen radial, also in Richtung X2 verlaufenden Arm 16 auf, der in Richtung hinzu dem auf der Werkzeugspindel aufgespannten Werkzeug 20 auskragt. Die axiale Abmessung des Armes 16 ist dabei so gering gewählt, dass es in der in Fig. 2 dargestellten Positionierung zu keinem Kontakt zwischen Werkzeug/Werkzeugspindel und dem Arm 16 kommt.

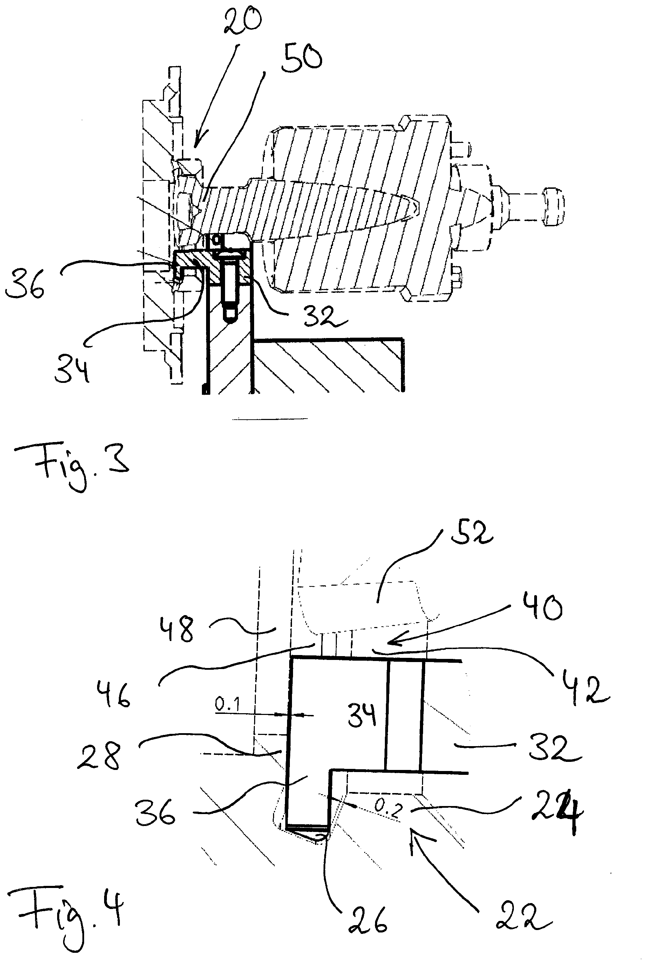

An dem Arm 16 ist eine Bewegungsänderungseinrichtung lösbar angebracht, deren Aufbau und Funktion im folgenden anhand der vergrößerten Darstellungen der Figuren 3 und 4 beschrieben wird.

Zunächst ist das innenverzahnte Werkstück in diesen Figuren mit 20 bezeichnet, und das Bezugszeichen 24 bezeichnet den im Axialschnitt von Fig. 4 erkennbaren Zahn der Innenverzahnung 22 des Werkstücks 20. In den Figuren 2 bis 4 links der Innenverzahnung 22 ist an diese anschließend ein Einstich 26 am Werkstück 20 gebildet, so dass sich der vom Werkstück radial umschlossene Raum 40 an dieser Stelle zunächst radial ausdehnt. Am hinteren Rand des Einstichs 26 weist das Werkstück 20 demnach eine kreisringförmige Wand 28 auf, aufgrund der sich der Raum 40 komplementär verjüngt. Der Durchmesser des dort verjüngten Raumbereichs 48 ist somit geringer als der des Raumbereiches 46, der axial zwischen Raumbereich 48 und dem von der Innenverzahnung begrenzten Raumbereich 42 des begrenzten Raumes 40 liegt.

Wie aus Fig. 3 erkennbar ist, ist an dem Arm 16 eine Einrichtung lösbar befestigt, die hinsichtlich ihrer Wirkung im folgenden als Chip-Stopper (Spanstopper) 30 bezeichnet wird. Der Chip-Stopper 30 weist einen Basisbereich 32 auf, der mit einer Bohrung versehen ist, über die er mittels eines Feststellmittels, beispielsweise einer Schraube mit dem Arm 16 verbunden ist. Anschließend an den Basisbereich 32 erstreckt sich ein Halsbereich 34 des Chip-Stoppers in axialer Richtung durch den Bereich 42 des Raumes 40 hindurch, in dem auch die Außenverzahnung 52 des Schälwerkzeugs 50 angeordnet ist. Während der Bearbeitung befinden sich somit sowohl das Bearbeitungswerkzeug 50 als auch der Chip-Stopper 30 gemeinsam in dem von der Innenverzahnung 22 umschlossenen Raum 42.

Am freien Ende des Halsbereiches 34 ist der Kopf 36 des Chip-Stoppers 30 angeordnet, der radial nach außen vorkragt, und somit, wie besser in Fig. 4 erkennbar, in den Einstich 26 am Werkstück 20 eingreift. Hier schließt der Kopfbereich 36 des Chip-Stoppers 30 den Einstich 26 und wandelt an dieser Stelle den Raumbereich 46 von einem ansonsten bestehenden Freiraum in einen gesperrten Raum.

Im folgenden wird die Wirkungsweise des Chip-Stoppers 30 beschrieben.

Bevor das Werkzeug 50 gemäß dem vorgesehenen Bearbeitungsverfahren in die in Fig. 3 gezeigte Relativlage zum Werkstück 20 gebracht wird, wird der Chip-Stopper 30 bei zunächst noch zurückgezogenem Werkzeug 50 durch Bewegung der Schlitten 14 und 12 entlang der Bewegungsachsen Z4 und X2 in die in Fig. 3 gezeigte Position gefahren. Die Bewegung entlang der Achse Z4 findet dabei bei gegenüber der Darstellung von Fig. 3 noch radial weiter in Richtung auf die Werkstückachsen in verstelltem Schlitten 12 statt. Erst wenn sich der Kopfbereich 36 auf Höhe des Einstiches 26 befindet, wird der Schlitten 12 radial nach außen bewegt, bis der Kopfbereich 36 den Einstich 26 vor der Ringflächenwand 28 schließt.

Nach dieser Positionierung des Chip-Stoppers 30, oder jedenfalls ab ausreichendem nach Einführung des Chip-Stoppers 30 in den Freiraum 40 verbleibenden Restfreiraum für die Positionierung des außenverzahnten Werkzeugs 50 wird letzteres wie im bisherigen Wälzschälverfahren üblich unter Drehung von Werkstück und Werkzeug durch entsprechende Steuerungen der verfügbaren Achsen in Bearbeitungseingriff mit dem Werkstück 20 gebracht, um die Innenverzahnung 22 zu erzeugen.

Ohne den Chip-Stopper 30 würde ein Teil der bei der Bearbeitung anfallenden Späne nicht von dem nicht dargestellten, aber vorgesehenen Druckluftstrahl zum Ausblasen der Späne durch den Raumbereich 48 hindurch aus dem Freiraum 40 entfernt, sondern, aufgrund der hohen Werkstückdrehzahl einer hohen Rotationsgeschwindigkeit ausgesetzt, mit der damit einhergehenden Zentrifugalkraft in den Einstich 26 gelangen und die Wand 28 nicht mehr überwinden. Die sich dort sammelnden Späne gelangen schließlich in den Arbeitsbereich des Werkzeugs 50 mit der Folge, dass sowohl das gegenwärtig erzeugte Werkstück als auch das Werkzeug beschädigt oder gar zerstört werden. Dies ist auch der Grund, warum Werkstücke mit dem sich verjüngenden Freiraum bislang nicht durch Wälzschälen herstellbar waren.

Aufgrund des parallel zum Werkstück eingeführten Chip-Stoppers 30 sperrt der Kopfbereich 36 jedoch an der entsprechenden azimutalen Stelle den Einstich 26. Dies hat zur Folge, dass die sich andernfalls in dem Einstich 26 sammelnden Späne gegen den Chip-Stopper 30 stoßen und ihre azimutale Geschwindigkeitskomponente aufgrund ihrer gegenüber der Masse des Chip-Stoppers 30 um Größenordnungen kleineren Masse verringert wird, im Vergleich mit der zuvorigen hohen Geschwindigkeit auf deutlich niedrigere, nach Ausbildung der Prallfläche auch auf nahezu Null. Infolgedessen reduziert sich entsprechend die auf diese Späne wirkende Zentrifugalkraft bis auf effektiv Null, und die Späne werden unter Wirkung des eingesetzten Druckluftstrahls aus dem Freiraum 40 ebenfalls hinausbefördert.

Die Prallfläche des Kopfbereiches 36 kann hier, obschon nicht dargestellt, gegenüber der Radialrichtung derart geneigt sein, dass deren radial weiter innen liegender Bereich azimutal in Werkstückdrehrichtung zurückweicht. Die Prallfläche muss dabei keine planare Fläche sein, sondern könnte auch gekrümmt sein. Aufgrund dieser Neigung erhalten die Späne beim Stoß mit der Prallfläche eine radial nach innen gerichtete Geschwindigkeitskomponente, durch die sie schneller und wirksamer von der Druckluftströmung erfasst werden und den Raum 40 verlassen können. Eine Wirkung des Chip-Stoppers 30 zeigt sich jedoch bereits unabhängig von der genaueren Gestaltung der Prallfläche.

Mit dem vorgesehenen Chip-Stopper wird das Anwendungsgebiet des Wälzschälens somit auf der genannten Werkstückform innenverzahnter Werkstücke erweitert.

Zudem lassen sich dem Chip-Stopper 30 durch geeignete Form- und Materialauswahl noch Zusatzfunktionen zuteilen, wie etwa das Entgraten der hinteren Zahnkanten. Es lässt sich jedoch auch als Drehwerkzeug einsetzen, um eine insbesondere hinter der Innenverzahnung liegende Kontur des Werkstückes, beispielsweise den Einstich 26 erst zu erzeugen. So könnte beispielsweise die Erzeugung des Einstiches 26 und die Erzeugung der Innenverzahnung 22 zeitparallel erfolgen, wodurch sich die Gesamtbearbeitungszeit zur Werkstückherstellung deutlich verringert. Hinsichtlich des Entgratens besteht die Möglichkeit, die Innenverzahnung 22 wie oben beschrieben zu erzeugen, axial an den Kanten vorstehendes Material anschließend mit dem als Entgrater gestalteten Chip-Stopper 30 zu entfernen (wozu ggf. das Werkzeug 50 zurückgezogen werden kann). Gegebenenfalls könnte das Schälwerkzeug 50 zurückgezogen werden, um mehr Raum für eine ggf. beabsichtigte radial Bewegung (X2-Achse) des (entgratenden) Chip-Stoppers 30 zu schaffen. Nach dem Entgraten könnte man das Schälwerkzeug nochmal in einem Schlichtgang an den Zahnflanken entlangführen, um im Bereich der Zahnkanten durch die Entgratung azimutal vorstehende Materialrückstände zu beseitigen.

## Patentansprüche

1. Verfahren zur spanenden Erzeugung oder Bearbeitung einer Innenverzahnung (22) eines um seine Rotationsachse (C) drehbaren Werkstücks (20), welches radial einen Freiraum (40) begrenzt, der sich axial zu einer Seite hin über den innenverzahnten Bereich hinaus erstreckt und dessen radiale Ausdehnung sich an wenigstens einer Stelle in Erstreckungsrichtung verjüngt,
wobei man dazu ein um seine Rotationsachse (B) drehend angetriebenes außenverzahntes Werkzeug (50) von der anderen Seite her unter einem Achskreuzwinkel in Wälzeingriff mit der Innenverzahnung bringt, **dadurch gekennzeichnet, dass** man die Bewegung von anfallenden und eine Zentrifugalkraft unterworfenen Spänen im Bereich vor der Verjüngungsstelle durch mechanische Krafteinwirkung in einer dem Ursprung der Zentrifugalkraft entgegengesetzter Weise ändert, wobei die mechanische Krafteinwirkung durch Stoß der Späne gegen einen massereichen, nicht mitrotierenden Stoßpartner (30, 36) erfolgt.

2. Verfahren nach Anspruch 1, bei dem die Bewegungsänderung eine Verringerung der azimutalen Geschwindigkeitskomponente der Späne beinhaltet.

3. Verfahren nach Anspruch 1 oder 2, bei dem die Bewegungsänderung eine radial nach innen weisende Geschwindigkeitskomponente der Späne hervorruft.

4. Verfahren nach einem der vorhergehenden Ansprüche, bei dem die Verjüngung in Form einer Stufe (28) auftritt.

5. Verfahren nach einem der vorhergehenden Ansprüche, bei dem sich die radiale Ausdehnung des Freiraums (46) vor der Verjüngungsstelle und axial davon beabstandet erweitert.

6. Verfahren nach einem der vorhergehenden Ansprüche, bei dem man den Stoßpartner (30, 36) in radialer Richtung nahe an die Begrenzung des Freiraums, und insbesondere zum Werkstück kontaktfrei positioniert.

7. Verfahren nach einem der vorhergehenden Ansprüche, bei dem man den Stoßpartner (30, 36) in axialer Richtung nahe an die Verjüngungsstelle, aber insbesondere zum Werkstück kontaktfrei positioniert.

8. Verfahren nach einem der Ansprüche 5 bis 7, bei dem man den Stoßpartner in axialer Richtung nahe an die Erweiterungsstelle, aber insbesondere zum Werkstück kontaktfrei positioniert.

9. Verfahren nach einem der vorhergehenden Ansprüche, bei dem man den Stoßpartner (30, 36) durch den Freiraum (42) im Bereich der Innenverzahnung hindurch hält und die Halterung in diesem Bereich mit Abstand zum Werkzeug (50) positioniert.

10. Verfahren nach einem der vorhergehenden Ansprüche, bei dem man ein Fluid, insbesondere Luft, in Erstreckungsrichtung durch den Freiraum strömen läßt.

11. Werkzeugmaschine (100) für die spanende Erzeugung oder Bearbeitung einer Innenverzahnung an einem um seine Rotationsachse drehend antreibbaren Werkstück (20) mit einem um seine Rotationsachse drehend angetriebenen, außenverzahnten und für einen Wälzeingriff mit der Innenverzahnung unter einem Achskreuzwinkel ausgelegten Werkzeug (50), wobei die Werkzeugmaschine
eine Werkstückspindel (2) zur Aufspannung des innenverzahnten Werkstückes (20),
eine Werkzeugspindel (10) für die Aufspannung des Werkzeugs (50),
eine erste Linearachse (Z) zur Änderung der Relativlage zwischen Werkstück- und Werkzeugspindel mit einer parallel zur Werkstückachse verlaufenden Richtungskomponente,
eine zweite Linearachse (X) zur Änderung des Achsabstandes zwischen Werkstückdrehachse und Werkzeugdrehachse, und
eine rotatorische Achse (A) zur Änderung des Achskreuzwinkels zwischen Werkstückdrehachse und Werkzeugdrehachse aufweist,
**gekennzeichnet durch** eine Einrichtung (30) zur Änderung der Bewegung der bei der spanabhebenden Erzeugung oder Bearbeitung der Innenverzahnung des Werkstückes anfallenden Spänen, mit
einem sich in einer axialen Richtung erstreckenden Halsbereich (34) zur Durchführung durch einen von der Innenverzahnung radial begrenzten Freiraum hindurch,
einem am freien Ende des Halsbereiches radial auskragenden Kopfbereich (36), der eine für einen Stoß mit den Spänen vorgesehene Prallfläche aufweist, und
einem an dem anderen Ende des Halsbereiches anschließenden Basisbereichs (32) sowie durch eine Bewegungseinrichtung (12, 14) mit Bewegungskomponente parallel zur ersten Linearachse (Z) und insbesondere unabhängig davon mit einer weiteren Bewegungskomponente orthogonal zu dieser Bewegungskomponente, wobei die Bewegungseinrichtung an den Basisbereich (32) der Bewegungsänderungseinrichtung (30) angekoppelt ist, so dass die Bewegungsänderungseinrichtung (30) durch die Bewegungsachsen der Bewegungseinrichtung (12, 14) mit Bewegungskomponente in axialer Richtung und unabhängig davon mit Bewegungskomponente in radialer Richtung beweglich ist.

12. Werkzeugmaschine nach Anspruch 11, bei deren Bewegungsänderungseinrichtung die axiale Abmessung des Kopfbereiches wenigstens zum Teil an die Kontur des von dem Werkstück über den innenverzahnten Bereich hinausgehenden radial begrenzten Freiraums angepaßt ist.

13. Werkzeugmaschine nach Anspruch 11 oder 12, bei deren Bewegungsänderungseinrichtung die Prallfläche wenigstens teilweise gegenüber der radialen Richtung geneigt ist.

14. Werkzeugmaschine nach einem der Ansprüche 11 bis 13, bei deren Bewegungsänderungseinrichtung mehrere azimutal beabstandete Kopfbereiche vorgesehen sind, die sich azimutal gesehen insgesamt über mehr als 60°, bevorzugt über mehr als 90°, insbesondere über mehr als 120° erstrecken.

15. Werkzeugmaschine nach einem der Ansprüche 11 bis 14, bei deren Bewegungsänderungseinrichtung der/die Kopfbereiche abnehmbar und insbesondere austauschbar sind.

16. Werkzeugmaschine nach einem der Ansprüche 11 bis 15, mit einem zum Austausch vorgesehenen Satz von Bewegungsänderungseinrichtungen, deren jeweilige Kopfbereiche unterschiedliche Abmessungen und/oder radiale aufweisen.

17. Werkzeugmaschine nach einem der vorangehenden Ansprüche, mit einer Steuereinrichtung, die zur Steuerung der Werkzeugmaschine zu einem Verfahren der Ansprüche 1 bis 10 ausgelegt ist.

## Claims

1. A method for cutting or machining of internal gear teeth (22) on a workpiece (20) which is rotatable about its rotation axis (C) and radially delimits a free space (40) that extends axially to one side beyond the internally toothed region and whose radial extension is tapered along the direction of its axial extension in at least one point, wherein, to carry out said method, an externally toothed tool (50) which is rotationally driven about its rotation axis (B) is brought from the opposite side into rolling engagement with the internally toothed region, forming an axis intersection angle, **characterised in that** the chips which are produced and subjected to centrifugal force are caused to change their movement through the application of a mechanical force in the area upstream from the tapering point in a manner directed against the origin of the centrifugal force, wherein the application of the mechanical force occurs as a result of the chips colliding with a non-corotating collision partner (30, 36) of greater mass.

2. The method according to claim 1, wherein the change in movement comprises a decrease of the azimuthal velocity component of the chips.

3. The method according to claim 1 or 2, wherein the change in movement gives rise to a radially inward directed velocity component of the chips.

4. The method according to any preceding claim, wherein the tapering occurs in the form of a step (28).

5. The method according to any preceding claim, wherein the radial extension of the free space (46) increases upstream from the tapering point and at an axial distance from the latter.

6. The method according to any preceding claim, wherein the collision partner (30, 36) is positioned radially close to the boundary of the free space, and in particular contact-free with the workpiece.

7. The method according to any preceding claim, wherein the collision partner (30, 36) is positioned axially close to the tapering point, but in particular contact-free with the workpiece.

8. The method according to one of claims 5 to 7, wherein the collision partner is positioned axially close to a widening point, but in particular contact-free with the workpiece.

9. The method according to any preceding claim, wherein the collision partner (30, 36) is held in a position to reach through the free space (42) in the area of the internal gear teeth and the holding device is positioned within said area at a distance from the tool (50).

10. The method according to any preceding claim, wherein a fluid, especially air, is caused to stream through the free space in the direction of extension of the free space.

11. A machine-tool (100) for cutting or machining internal gear teeth on a workpiece (20) which can be rotationally driven about its rotation axis, comprising an externally toothed tool (50) which is rotationally driven about its rotation axis and is adapted for rolling engagement with the internal gear teeth, forming an axis intersection angle, wherein the machine-tool comprises:
a workpiece spindle (2) for clamping the internally toothed workpiece (20),
a tool spindle (10) for clamping the tool (50),
a first linear axis (Z) for changing the relative position between the workpiece spindle and the tool spindle with a directional component parallel to the rotation axis of the workpiece,
a second linear axis (X) for changing the distance between the workpiece rotation axis and the tool rotation axis, and
a rotary axis (A) for changing the axis intersection angle between the workpiece rotation axis and the tool rotation axis,
**characterised by** a device (30) for changing the movement of chips produced during the cutting or machining of internal gear teeth of the workpiece, comprising:
a neck portion (34) extending axially to reach through a free space that is radially delimited by the internal gear teeth,
a head portion (36) projecting radially at the free end of the neck portion and carrying an impact surface adapted for a collision with the chips, and
abase portion (32) adjoining the other end of the neck portion (32);
and by a movable support device (12, 14) comprising a component of motion which is parallel to the first linear axis (Z) and, in particular independently therefrom, comprising an additional component of motion which is orthogonal to said component of motion, wherein the movable support device is coupled to the base portion (32) of the motion-changing device (30), so that the motion-changing device (30) is movable through the movement axes of the movable support device (12, 14) with a component of motion in the axial direction and, independently therefrom, with a component of motion in the radial direction.

12. The machine-tool according to claim 11, in whose motion-changing device the axial dimension of the head portion conforms at least in part to the contours of the free space that is radially delimited by the workpiece and extends beyond the internally toothed area.

13. The machine-tool according to claim 11 or 12, in whose motion-changing device the impact surface is at least in part slanted relative to the radial direction.

14. The machine-tool according to one of claims 11 to 13, in whose motion-changing device a plurality of azimuthally separated head portions are provided, which extend over a total azimuthal range of more than 60°, preferably more than 90°, particularly more than 120°.

15. The machine-tool according to one of claims 11 to 14, in whose motion-changing device the one or more head portions are removable and, in particular, exchangeable.

16. The machine-tool according to one of claims 11 to 15, comprising a set of motion-changing devices which are exchangeable and whose respective head portions differ from each other in their axial and/or radial dimensions.

17. The machine-tool according to any of the preceding claims, comprising a control device which is configured to control the machine-tool to carry out a method according to claims 1 to 10.

## Revendications

1. Procédé de production ou d'usinage par enlèvement de matière d'une denture intérieure (22) d'une pièce à usiner (20) tournant sur son axe de rotation (C) délimitant radialement un espace libre (40) s'étendant axialement d'un côté au-delà de la zone à denture intérieure et dont la dimension radiale va en s'effilant en au moins un point dans le sens de son étendue, aux fins duquel procédé on met en contact à roulement, depuis l'autre côté, un outil (50) à denture extérieure entraîné en rotation sur son axe de rotation (B), avec formation d'un angle d'intersection d'axes,
**caractérisé en ce qu'**on modifie, d'une manière opposée à l'origine d'une force centrifuge, le déplacement des copeaux produits et soumis à la force centrifuge dans une zone située en amont du point d'effilement sous l'effet d'une application de force mécanique, ladite application de force mécanique résultant de l'impact des copeaux contre un partenaire d'impact non co-rotatif (30, 36) de masse supérieure.

2. Procédé selon la revendication 1, dans lequel la modification du déplacement comprend une réduction de la composante de vitesse azimutale des copeaux.

3. Procédé selon la revendication 1 ou 2, dans lequel la modification du déplacement provoque une composante de vitesse des copeaux dirigée radialement vers l'intérieur.

4. Procédé selon l'une des revendications précédentes, dans lequel l'effilement a lieu sous la forme d'un gradin (28).

5. Procédé selon l'une des revendications précédentes, dans lequel la dimension radiale de l'espace libre (46) s'élargit en amont du point d'effilement et à distance axiale de celui-ci.

6. Procédé selon l'une des revendications précédentes, dans lequel on positionne le partenaire d'impact (30, 36) dans le sens radial à proximité de la limite de l'espace libre, et notamment sans contact vis-à-vis de la pièce à usiner.

7. Procédé selon l'une des revendications précédentes, dans lequel on positionne le partenaire d'impact (30, 36) dans le sens axial à proximité du point d'effilement, mais notamment sans contact vis-à-vis de la pièce à usiner.

8. Procédé selon l'une des revendications 5 à 7, dans lequel on positionne le partenaire d'impact dans le sens axial à proximité du point d'élargissement, mais notamment sans contact vis-à-vis de la pièce à usiner.

9. Procédé selon l'une quelconque des revendications précédentes, dans lequel on maintient le partenaire d'impact (30, 36) à travers l'espace libre (42) dans la zone de la denture intérieure et on positionne le dispositif de maintien dans cette zone à distance de l'outil (50).

10. Procédé selon l'une quelconque des revendications précédentes, dans lequel on fait couler un fluide, notamment de l'air, dans l'espace libre dans le sens de son étendue.

11. Machine-outil (100) de production ou d'usinage par enlèvement de matière d'une denture intérieure d'une pièce à usiner (20) susceptible d'être entraînée en rotation sur son axe de rotation, comprenant un outil à denture extérieure entraîné en rotation sur son axe de rotation et conçu pour un contact à roulement avec la denture intérieure, avec formation d'un angle d'intersection d'axes, ladite machine-outil présentant :
une broche de pièce à usiner (2) permettant de serrer la pièce à usiner (20) à denture intérieure,
une broche d'outil (10) permettant de serrer l'outil (50),
un premier axe linéaire (Z) permettant de modifier la position relative entre la broche de pièce à usiner et la broche d'outil et présentant une composante directionnelle parallèle à l'axe de la pièce à usiner,
un deuxième axe linéaire (X) permettant de modifier l'écart axial entre l'axe de rotation de la pièce à usiner et l'axe de rotation de l'outil, et
un axe rotatif (A) permettant de modifier l'angle d'intersection d'axes entre l'axe de rotation de la pièce à usiner et l'axe de rotation de l'outil,
**caractérisé par** un dispositif (30) de modification du déplacement des copeaux produits lors de la production ou de l'usinage par enlèvement de matière de la denture intérieure de la pièce à usiner, comprenant
une zone d'encolure (34) s'étendant dans un sens axial et destinée à pénétrer dans un espace libre délimité radialement par la denture intérieure,
une zone de tête (36) faisant radialement saillie à l'extrémité libre de la zone d'encolure, laquelle zone de tête présente une surface d'impact prévue pour l'impact des copeaux, et
une zone de base (32) faisant suite à l'autre extrémité de la zone d'encolure,
ainsi que par un dispositif de déplacement (12, 14) présentant une composante de mouvement parallèle au premier axe linéaire (Z) et, notamment indépendamment de cela, présentant une autre composante de mouvement orthogonale à ladite composante de mouvement, ledit dispositif de déplacement étant couplé à la zone de base (32) du dispositif de modification de déplacement (30) de manière que le dispositif de modification de déplacement (30) soit mobile sur les axes de déplacement du dispositif de déplacement (12, 14) en présentant une composante de mouvement dans le sens axial et, indépendamment de cela, une composante de mouvement dans le sens radial.

12. Machine-outil selon la revendication 11, dans le dispositif de modification de déplacement de laquelle la dimension axiale de la zone de tête est adaptée au moins en partie aux contours de l'espace libre délimité radialement par la pièce à usiner et s'étendant au-delà de la zone à denture intérieure.

13. Machine-outil selon la revendication 11 ou 12, dans le dispositif de modification de déplacement de laquelle la surface d'impact est inclinée au moins en partie par rapport au sens radial.

14. Machine-outil selon l'une des revendications 11 à 13, dans le dispositif de modification de déplacement de laquelle sont prévues plusieurs zones de tête avec un écart azimutal les unes par rapport aux autres et s'étendant en totalité, du point de vue azimutal, sur plus de 60°, de préférence plus de 90°, notamment plus de 120°.

15. Machine-outil selon l'une des revendications 11 à 14, dans le dispositif de modification de déplacement de laquelle la ou les zones de tête sont amovibles et notamment changeables.

16. Machine-outil selon l'une des revendications 11 à 15, comprenant un ensemble de dispositifs de modification de déplacement prévus pour un changement et dont les zones de têtes respectives présentent des dimensions axiales et/ou radiales différentes.

17. Machine-outil selon l'une des revendications précédentes, comprenant un dispositif de commande conçu pour commander la machine-outil afin de réaliser un procédé selon les revendications 1 à 10.
